# EUROPÄISCHE PATENTSCHRIFT

(11) **EP 1 958 706 B1**
(45) Veröffentlichungstag und Bekanntmachung des Hinweises auf die Patenterteilung: **03.02.2010**
(21) Anmeldenummer: 07024088.2
(22) Anmeldetag: 12.12.2007
(51) Int. Cl.: B05C 13/02, B65D 23/08, C03C 17/00

(54) **Vorrichtung und Verfahren zum Anbringen eines das Erscheinungsbild der Oberflächen wiederverwendbarer Getränkeflaschen verbessernden Auftrags**
Method and device for applying a coating to the surfaces of reusable drink bottles in order to improve their appearance
Dispositif et procédé destinés à l'application d'un revêtement améliorant la présentation des surfaces de bouteilles réutilisables

(30) Priorität: 14.02.2007 DE 102007007358
(43) Veröffentlichungstag der Anmeldung: 20.08.2008
(73) Patentinhaber: Paulaner Brauerei GmbH & Co. KG, 81541 München (DE)
(72) Erfinder: Lettl, Anton, 85560 Ebersberg (DE)
(74) Vertreter: Ruttensperger, Bernhard

(56) Entgegenhaltungen:
- EP-A- 1 600 217
- WO-A-2006/021233
- DE-A1- 4 431 113
- JP-A- 59 228 973
- JP-A- 60 033 232
- US-A- 5 215 622

## Beschreibung

Die vorliegende Erfindung betrifft eine Vorrichtung zum Aufbringen eines das Erscheinungsbild der Oberflächen wiederverwendbarer Getränkeflaschen verbessernden Auftrags. Weiter betrifft die vorliegende Erfindung ein Verfahren, mit welchem durch Aufbringen eines Auftrags auf die Oberflächen wiederverwendbarer Getränkeflaschen deren Erscheinungsbild verbessert werden kann.

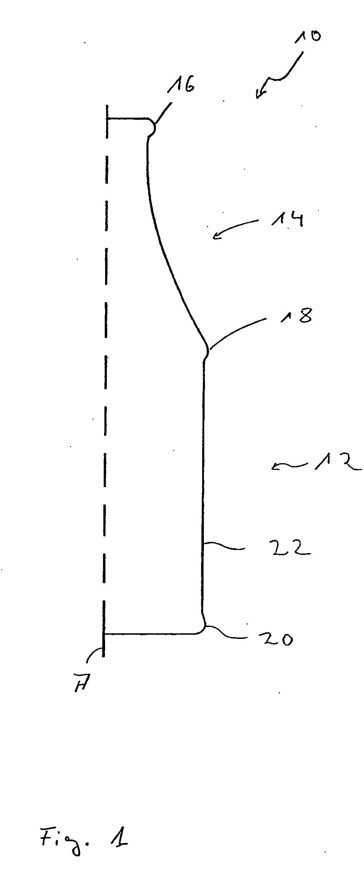

Eine Getränkeflasche, wie sie in der Lebensmittelindustrie als wiederverwendbare Flasche oder so genannte Pfandflasche eingesetzt wird, ist in Fig. 1 mit einer Hälfte dargestellt. Eine derartige beispielsweise als Bierflasche eingesetzte Getränkeflasche 10 umfasst in ihrem unteren Bereich einen näherungsweise zylindrischen Flaschenkörper 12, der im oberen Bereich in einen sich verjüngenden Flaschenhals 14 übergeht. Der Flaschenhals 14 kann in einem wulstartigen Randbereich 16 enden, auf dem beispielsweise ein Kronenkorken oder dergleichen angebracht werden kann. Im Bereich des Flaschenkörpers weist die Getränkeflasche 10 zwei diesen nach oben bzw. auch nach unten begrenzende wulstartige Vorsprünge 18 bzw. 20 auf. Diese erstrecken sich ringartig um die Flaschenlängsachse A herum und belassen durch den zwischen diesen existenten Höhenabstand einen vertieften Bereich 22. In diesem vertieften Bereich 22 werden am Flaschenkörper 12 Etiketten angebracht. Bei der Verarbeitung derartiger Flaschen stoßen diese gegenseitig an diesen wulstartigen Vorsprünge 18, 20 aneinander an, so dass insbesondere bereits aufgebrachte Etiketten nicht beschädigt werden.

Da derartige Getränkeflaschen 10 zur Wiederverwendung vorgesehen sind und somit wiederholt die zum Reinigen, Befüllen, Etikettieren und dergleichen vorgesehenen Vorrichtungen durchlaufen, stoßen sie im Verlauf ihrer Betriebslebensadauer häufig an anderen Flaschen an. Dies führt dazu, dass im Bereich dieser wulstartigen Vorsprünge 18, 20 eine möglicherweise auf die Glasoberfläche aufgebrachte Vergütungslage beschädigt wird und dort Mikrorisse oder sonstige sehr kleine Beschädigungen entstehen. Das wiederholte Reinigen derartiger Flaschen, insbesondere unter Einsatz von Natronlauge, führt dazu, dass im Bereich der möglicherweise mikroskopisch kleinen Oberflächenbeschädigungen an den wulstartigen Vorsprüngen 18, 20 eine Eintrübung der Glasoberfläche erzeugt wird. Dieser als "Scuffing" bezeichnete Effekt führt zu hellen Ringen, die sich im Bereich der wulstartigen Vorsprünge 18, 20 um den gesamten Flaschenumfang herum erstrecken. Obgleich durch diesen Effekt die strukturelle Festigkeit der Glasflaschen nicht beeinträchtigt wird, werden derartige helle Ringe insbesondere auf dunkel gefärbten Glasflaschen als unansehnlich empfunden, insbesondere auch daher, da derartige Flaschen oftmals auf einem Esstisch abgestellt werden.

Es ist daher eine übliche Vorgehensweise, nach der Durchführung des Reinigungsprozesses in einer Inspektionsvorrichtung die Flaschen optisch zu erfassen und beispielsweise auf Grund der Breite der im Bereich der wulstartigen Vorsprünge 18, 20 gebildeten hellen Ringe zu entscheiden, ob eine Flasche dem dann folgenden Befüllprozess zugeführt wird, oder ob sie als Ausschuss dem Glas-Recyclingprozess zugeführt wird. Um bei dieser Vorgehensweise dafür sorgen zu können, dass nur Flaschen mit einem möglichst wenig beeinträchtigten Erscheinungsbild in den Verkauf gelangen, muss also bei der Entscheidung in der Inspektionsvorrichtung die Abnutzungsschwelle, ab welcher eine Flasche nicht mehr der Befüllung zugeführt wird, vergleichsweise nieder angesetzt werden, was zu einem sehr hohen Anteil an Flaschenausschuss führt.

Aus der EP 1 600 217 A1 ist eine Vorrichtung gemäß dem Oberbegriff des Anspruchs 1 bekannt. Diese bekannte Vorrichtung weißt eine Endlos-Auftrageriemenanordnung mit zwei beiderseits eines Förderwegs für aufrecht stehende Flaschen angeordneten Endlos-Auftrageriemen auf. Diese werden so zur Bewegung angetrieben, dass sie sich in ihrem mit den Flaschen zum Auftragen eines deren Erscheinungsbild verbessernden Auftrags in Kontakt tretenden Bewegungsbereich in der Bewegungsrichtung der Flaschen bewegen. Die Endlos-Auftrageriemen weisen jeweils einen Auftrageriemenbereich auf, der mit der Flaschenoberfläche in Kontakt tritt und durch eine Sprühvorrichtung mit dem aufzutragenden Beschichtungsmaterial gespeist wird.

Es ist die Aufgabe der vorliegenden Erfindung, eine Vorrichtung zum Aufbringen eines das Erscheinungsbild der Oberflächen wiederverwendbarer Getränkeflaschen verbessernden Auftrags bzw. ein Verfahren zum Aufbringen eines derartigen Auftrags vorzusehen, mit welchen in einfacher und zuverlässiger Weise diskrete Oberflächenbereiche mit Auftragematerial beschichtet werden können, während andere, nicht dafür vorgesehene Oberflächenbereiche nicht beschichtet werden. Weiter ist es die Aufgabe der vorliegenden Erfindung, eine Vorgehensweise zum Aufbringen eines derartigen das optische Erscheinungsbild verbessernden Auftrags vorzusehen.

Gemäß einem ersten Aspekt der vorliegenden Erfindung wird diese Aufgabe gelöst durch eine Vorrichtung zum Aufbringen eines das Erscheinungsbild der Oberflächen wiederverwendbarer Getränkeflaschen verbessernden Auftragsgemäß Anspruch 1. Die Vorrichtung umfasst eine Endlos-Auftrageriemenanordnung, welche in einem Auftragetransportabschnitt mit der Oberfläche der aufrecht stehend in einer Transportrichtung bewegten Flaschen in Kontakt kommt und dabei in der Auftrageriemenanordnung enthaltenes Auftragematerial auf die Flaschenoberflächen überträgt.

Bei der vorliegenden Erfindung wird also durch unmittelbaren Kontakt mit den Getränkeflaschen und dabei das Auftragen des Auftragematerials dafür gesorgt, dass nur zu überdeckende Bereiche, also beispielsweise Bereiche, in welchen durch den so genannten Scuffing-Effekt helle Ringe entstanden sind, mit dem Auftragematerial überzogen werden. Da dies nur dort erfolgt, wo ein körperlicher Kontakt zwischen den Flaschen und der Endlos-Auftrageriemenanordnung besteht, können definierte Höhenbereiche zur Beschichtung ausgewählt werden, also insbesondere diejenigen Bereiche, in welchen die Abnutzungsringe erkennbar sind. Andere Bereiche, wie z.B. die der Flaschenöffnung nahe liegenden Bereiche oder zum Etikettieren vorgesehenen Bereiche, können ausgespart bleiben, so dass weder eine Geschmaksbeeinträchtigung beim Trinken entstehen kann, noch eine Beschädigung bereits aufgebrachter Etiketten erzeugt wird.

Die Endlos-Auftrageriemenanordnung umfasst wenigstens einen mit dem Auftragematerial tränkbaren, vorzugsweise schwammartigen, und in Kontakt mit den Flaschenoberflächen kommenden Auftrageriemenbereich. Entsprechend der Formgebung der zu beschichtenden Flaschen und mithin auch der Anzahl an zu beschichtenden Oberflächenbereichen kann gemäß einem weiteren Aspekt vorgesehen sein, dass in Zuordnung zu jedem mit Auftragematerial zu beschichtenden Höhenbereich der Flaschenoberflächen die Endlos-Auftrageriemenanordnung wenigstens einen Auftrageriemenbereich aufweist.

Um mit der erfindungsgemäßen Vorrichtung exakt dort eine Beschichtung aufzubringen, wo dies erforderlich ist, also insbesondere im Bereich der mit Bezug auf die Fig. 1 beschriebenen wulstartigen Vorsprünge, wird vorgeschlagen, dass unterschiedlichen Höhenbereichen der Flaschenoberflächen zugeordnete Auftrageriemenbereiche in dem Höhenabstand der Höhenbereiche entsprechendem Abstand übereinander angeordnet sind.

Um die beim Kontakt der Endlos-Auftrageriemenanordnung mit einer jeweils zu beschichtenden Getränkeflasche auftretenden Querkräfte abfangen zu können und somit ein seitliches Abkippen dieser Getränkeflaschen zu vermeiden, gleichzeitig jedoch die Beschichtungseffizienz zu erhöhen, wird vorgeschlagen, dass an beiden Seiten bezüglich der Transportrichtung jeweils wenigstens ein Auftrageriemenbereich vorgesehen ist.

Dabei kann eine optimale Beschichtung der Glasflaschen dadurch sichergestellt werden, dass der Abstand von quer zur Transportrichtung einander gegenüber liegenden Auftrageriemenbereichen höchstens dem Durchmesser der in der Transportrichtung bewegten Flaschen in dem jeweils zu beschichtenden Höhenbereich entspricht.

Da die im Bereich wulstartiger Vorsprünge generierten Abnutzungseffekte sich im Allgemeinen über den gesamten Umfangsbereich von Getränkeflaschen erstrecken, ist es gewünscht, auch den Auftrag über den gesamten Umfang vorzusehen. Dies kann beispielsweise dadurch realisiert werden, dass die an beiden Seiten bezüglich der Transportrichtung vorgesehenen Auftrageriemenbereiche mit zueinander unterschiedlichen Bewegungsgeschwindigkeiten antreibbar sind. Hier wird also sichergestellt, dass nicht nur ein beim Eintritt in den Auftragetransportabschnitt kontaktierter Oberflächenbereich beschichtet wird. Durch die unterschiedliche Bewegungsgeschwindigkeit der Auftrageriemenbereiche an den beiden Seiten wird eine Rotation der so kontaktierten Getränkeflaschen erzeugt. Hierzu wird vorgeschlagen, dass die Auftrageriemenbereiche mit derart unterschiedlichen Bewegungsgeschwindigkeiten antreibbar sind, dass durch den Kontakt der Auftrageriemenbereiche mit den zu beschichtenden Flaschen die Flaschen in Rotation um ihre Längsachse versetzt werden und bei Bewegung durch den Auftragetransportabschnitt jeder zu beschichtende Höhenbereich über den gesamten Flaschenumfang durch wenigstens einen der Auftrageriemenbereiche beschichtet wird.

Die erfindungsgemäße Vorrichtung kann so aufgebaut sein, dass jeder Auftrageriemenbereich an einem separaten Endlos-Auftrageriemen vorgesehen ist. Dies lässt eine sehr einfache Anpassung an verschiedene Flaschenformgebungen zu. Alternativ ist es selbstverständlich auch möglich, an einem Endlos-Auftrageriemen mehrere, vorzugsweise zwei, übereinander angeordnete Auftrageriemenbereiche vorzusehen.

Um entsprechend der Bewegung der zu beschichtenden Getränkeflaschen durch den Auftragetransportabschnitt hindurch eine Bewegung der Endlos-Auftrageriemen mit der gewünschten Bewegungsgeschwindigkeit sicherstellen zu können, wird vorgeschlagen, dass jeder Endlos-Auftrageriemen als Zahnriemen mit einem Riemenkörper ausgebildet ist, der an einer Rückseite mit einer Verzahnung zum Antriebseingriff mit einem Antriebszahnrad ausgebildet ist und an einer Auftrageseite wenigstens einen Auftrageriemenbereich aufweist.

Da bei der erfindungsgemäßen Vorrichtung der bzw. jeder Auftrageriemenbereich auf einer Endlos-Riemenanordnung vorgesehen ist, und da im Allgemeinen der Auftrageriemenbereich an der Außenseite dieser Riemenanordnung vorgesehen ist, um den gewünschten Kontakt mit den Getränkeflaschen erzeugen zu können, wird beim Umlauf um eine Antriebs- oder/und Umlenkwalze im radial äußeren Bereich, also primär auch demjenigen Bereich, der zum Kontakt mit den Getränkeflaschen vorgesehen ist, eine vergleichsweise starke Materialdehnung erzwungen. Dies ist insbesondere dann, wenn der bzw. jeder Auftrageriemenbereich mit elastischem, schwammartigem Material aufgebaut ist, grundsätzlich möglich. Um bei einer derartigen Anordnung die Dehnungsbelastung der Auftrageriemenbereiche zu mindern, ist weiter vorgesehen dass jeder Auftrageriemenbereich eine Vielzahl von in einer Riemenlängsrichtung aufeinander folgenden Auftragesegmenten umfasst.

Um bei der erfindungsgemäßen Vorrichtung das auf die Flaschenoberflächen aufzubringende Auftragematerial in der Auftrageriemenanordnung vorsehen zu können, wird vorgeschlagen, dass jedem Auftrageriemenbereich Auftragematerialeinspeisemittel zugeordnet sind zum Einspeisen von flüssigem Auftragematerial in diesen.

Dabei kann beispielsweise vorgesehen sein, dass die Auftragematerialeinspeisemittel ein im Einspeisebetrieb im Wesentlichen feststehendes Zentralrohr mit wenigstens einer Radialabgabeöffnung aufweist, sowie eine das Zentralrohr umgebende Rotationshülse, welche im Einspeisebetrieb um das Zentralrohr rotiert und eine Mehrzahl von bei der Rotation zeitweise mit der wenigstens einen Radialabgabeöffnung sich überlappenden Ausstoßöffnungen aufweist. Mit derartigen allgemein auch als Drehrohrverteiler zu bezeichnenden Einspeisemitteln wird es möglich, das flüssige Auftragematerial in einer definierten Richtung, nämlich in Richtung auf einen jeweils zugeordneten Auftrageriemenbereich zu, abzugeben, während in anderen Richtungen kein Material abgegeben wird.

Bei einer derartigen Anordnung kann vorteilhafterweise vorgesehen sein, dass die Rotationshülse in Kontakt mit wenigstens einem Auftrageriemenbereich ist und durch diesen zur Drehung angetrieben wird. Es ist somit nicht erforderlich, für eine jeweilige Rotationshülse selbst einen Antrieb bereitzustellen, dessen Antriebsgeschwindigkeit dann mit der Bewegungsgeschwindigkeit eines jeweiligen Auftrageriemenbereichs synchronisiert werden müsste.

Um den Bereich, in welchem ein jeweiliges Auftragematerialeinspeisemittel dieses Auftragematerial in einen zugeordneten Auftrageriemenbereich aufspeist, variieren zu können, wird vorgeschlagen, dass ein Abgabewinkel der wenigstens einen Radialabgabeöffnung bezüglich des zugeordneten Auftrageriemenbereichs veränderbar ist.

Das flüssige Auftragematerial kann durch eine Auftragematerialversorgung in das Zentralrohr eingespeist werden.

Um grundsätzlich die zu beschichtenden Getränkeflaschen durch die erfindungsgemäße Vorrichtung bzw. den Auftragetransportbereich hindurchbewegen zu können, kann ein Förderband vorgesehen sein, welches die zu beschichtenden Flaschen aufrecht stehend durch den Auftragetransportabschnitt hindurchbewegt.

Gemäß einem weiteren Aspekt der vorliegenden Erfindung wird die eingangs genannte Aufgabe gelöst durch ein Verfahren zum Aufbringen eines das Erscheinungsbild der Oberflächen wiederverwendbarer Getränkeflaschen verbessernden Auftrags, wobei das Verfahren die Maßnahmen umfasst:
a) Bewegen der Flaschen in aufrecht stehendem Zustand in einer Transportrichtung durch einen Auftragetransportabschnitt,
b) im Auftragetransportabschnitt Berühren eines mit dem Auftragematerial zu beschichtenden Höhenbereichs der Flaschen mit wenigstens einem im Auftragetransportabschnitt sich in der Transportrichtung bewegenden und eine Vielzahl von in einer Riemenlängsrichtung aufeinander folgenden Auftragesegmenten umfassenden Auftrageriemenbereich und dabei Übertragen von im Auftrageriemenbereich enthaltenem Auftragematerial auf die Flaschenoberflächen.

Um bei dieser Vorgehensweise die zu beschichtenden Getränkeflaschen über den ganzen Umfang in einem jeweils vorgesehenen Höhenbereich beschichten zu können, wird vorgeschlagen, dass bei der Bewegung durch den Auftragetransportabschnitt die Flaschen um ihre Flaschenlängsachse gedreht werden.

Die zu beschichtenden Flaschen können an beiden Seiten bezüglich der Transportrichtung durch jeweils wenigstens einen Auftrageriemenbereich berührt werden, wobei diese an beiden Seiten bezüglich der Transportrichtung vorgesehenen Auftragetriemenbereiche sich mit unterschiedlicher Geschwindigkeit in der Transportrichtung bewegen und eine der Differenzgeschwindigkeit entsprechende Rotation der Flaschen erzeugen.

Um dabei sicherzustellen, dass der gesamte Umfangsbereich der zu beschichtenden Flaschen erfasst werden kann, wird weiter vorgeschlagen, dass die Differenzgeschwindigkeit derart eingestellt wird, dass bei Hindurchbewegung durch den Auftragetransportabschnitt die Flaschen in einem Winkelbereich von wenigstens etwa 180° gedreht werden. Das über die Auftrageriemenbereiche auf die Flaschenoberflächen zu übertragende Auftragematerial kann in einem Bereich außerhalb des Auftragetransportabschnitts in den wenigstens einen Auftrageriemenbereich eingespeist werden.

Bei dem erfindungsgemäßen Verfahren kann als Auftragematerial ein Gemisch aus Wachs, Wasser und Emulgatoren verwendet werden. Dabei haben die Emulgatoren im Wesentlichen die Funktion, das Wachs in gelöster Form im Wasser zu halten. Insbesondere das in diesem Auftragematerial enthaltene Wachs sorgt dafür, dass zunächst übermäßig abgenutzt erscheinende Ringbereiche nach Aufbringung der Beschichtung auf die Flaschenoberflächen näherungsweise das gleiche optische Erscheinungsbild bieten, wie nicht abgenutzte Flaschenbereiche. Dabei ist es von Bedeutung, dass das aufgebrachte Auftragematerial lebensmittelecht ist. Insbesondere sollte eine FDA-Zulassung für diese Materialien bestehen.

Die vorliegende Erfindung wird nachfolgend mit Bezug auf die beiliegenden Zeichnungen detailliert beschrieben. Es zeigt:
- Fig. 1: eine Teil-Ansicht einer in der Lebensmittelindustrie eingesetzten wiederverwendbaren Flasche;
- Fig. 2: in Prinzipansicht den Bearbeitungsprozess bei der Wiederverwendung einer in Fig. 1 gezeigten Flasche;
- Fig. 3: in Draufsicht eine Vorrichtung zum Aufbringen eines Auftrags auf Flaschenoberflächen mit ihren wesentlichen Komponenten;
- Fig. 4: die Vorrichtung der Fig. 3, betrachtet in Blickrichtung IV in Fig. 3;
- Fig. 5: eine Vertikalschnittansicht einer zum Einspeisen von Auftragematerial dienenden Baugruppe;
- Fig. 6: eine Horizontalschnittansicht der in Fig. 5 gezeigten Vorrichtung, geschnitten längs einer Linie VI - VI in Fig. 5.

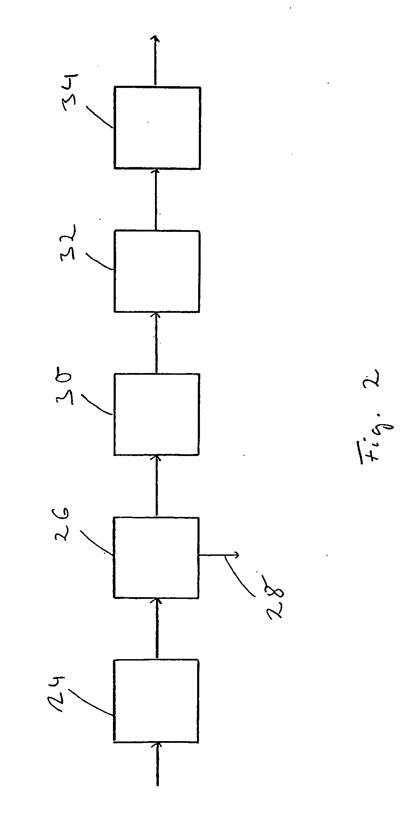

In Fig. 2 ist schematisch der Arbeitsprozess dargestellt, mit welchem die in Fig. 1 gezeigten wiederverwendbaren Getränkeflaschen 10 in der Getränkeindustrie verarbeitet werden. Nachdem diese Flaschen zunächst entweder als wieder zu verwendendes Leergut oder auch als Neuflaschen angeliefert wurden, werden sie in einem ersten Bearbeitungsprozess in einer Reinigungsvorrichtung 24 einem intensiven Reinigungsprozess unterzogen. Dabei kommt zum Ablösen von Verunreinigungen und von Klebstoffen der zuvor auf den Flaschen aufgebrachten Etiketten unter anderem Natronlauge zum Einsatz. Nach dem Reinigungsprozess verlassen die gereinigten Flaschen die Reinigungsvorrichtung und werden dann zur optischen Inspektion in vereinzelter, also nacheinander laufender Art und Weise in eine Inspektionsvorrichtung 26 eingeführt. In der Inspektionsvorrichtung 26 werden die Flaschen optisch erfasst und hinsichtlich ihres Abnutzungsgrads ausgewertet. Dies kann insbesondere mit Hinblick auf den vorangehend bereits erläuterten Scuffing-Effekt durch Erfassen der Breite der in den wulstartigen Vorsprüngen 18, 20 der Getränkeflaschen 10 gebildeten Ringe erfolgen. Sind diese Ringe zu breit, was eine übermäßige Abnutzung anzeigt, wird eine betroffene Flasche aussortiert und, wie durch einen Pfeil 28 angedeutet, dem Glas-Recyclingprozess zugeführt. Diejenigen Flaschen, die als noch nicht übermäßig abgenutzt eingestuft werden, werden weiter transportiert, um in einer Befüllvorrichtung 30 mit dem vorgesehenen Getränk, also beispielsweise Bier, befüllt und verschlossen zu werden. Auch die Befüllvorrichtung 30 wird, wie die anderen Vorrichtungen auch, in vereinzelter, also aufeinander folgender Formation, durchlaufen, während der Transport zwischen den einzelnen Bearbeitungsvorrichtungen als Massentransport erfolgen kann. Auf die Befüllung folgend werden die befüllten und verschlossenen Flaschen dann in einer Etikettiervorichtung 32 etikettiert. Nach dem Etikettieren werden die Flaschen zu einer Vorrichtung 34 transportiert, welche nachfolgend detailliert erläutert wird und in welcher auf die Getränkeflaschen 10 im Bereich der wulstartigen Vorsprünge 18, 20 ein Auftrag aufgebracht wird. Dieser Auftrag sorgt dafür, dass die dort gegebenenfalls vorhandenen und durch das Anstoßen der Flaschen aneinander gebildeten Scuffing-Ringe überzogen werden und dann praktisch nicht mehr sichtbar sind. Nach dem Durchgang durch die Vorrichtung 34 werden die Flaschen dann beispielsweise in Träger oder sonstige Verpackungseinheiten eingesetzt und können abtransportiert werden.

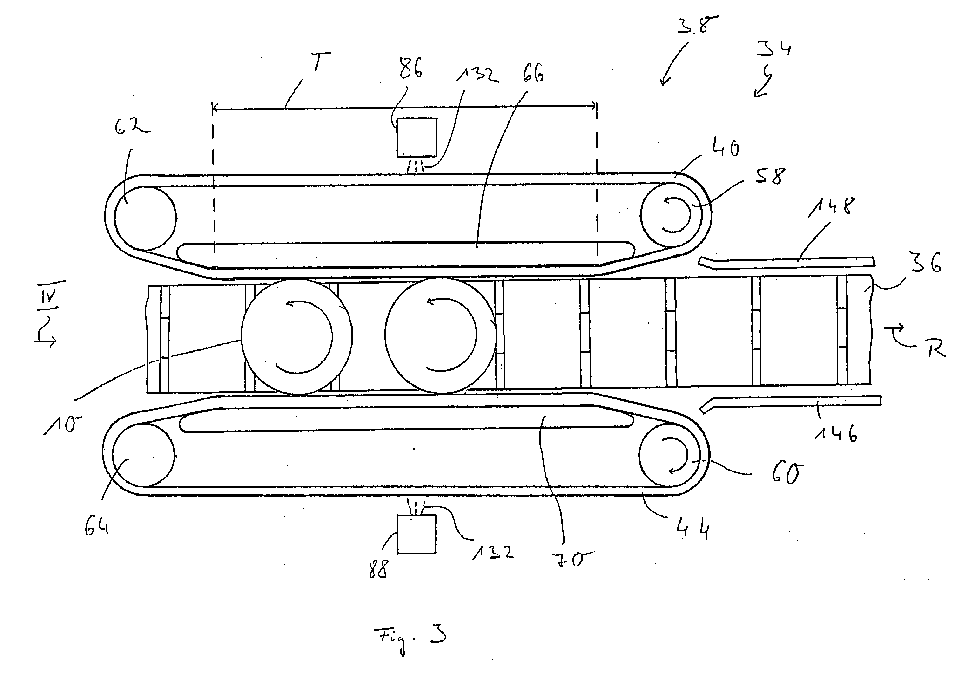

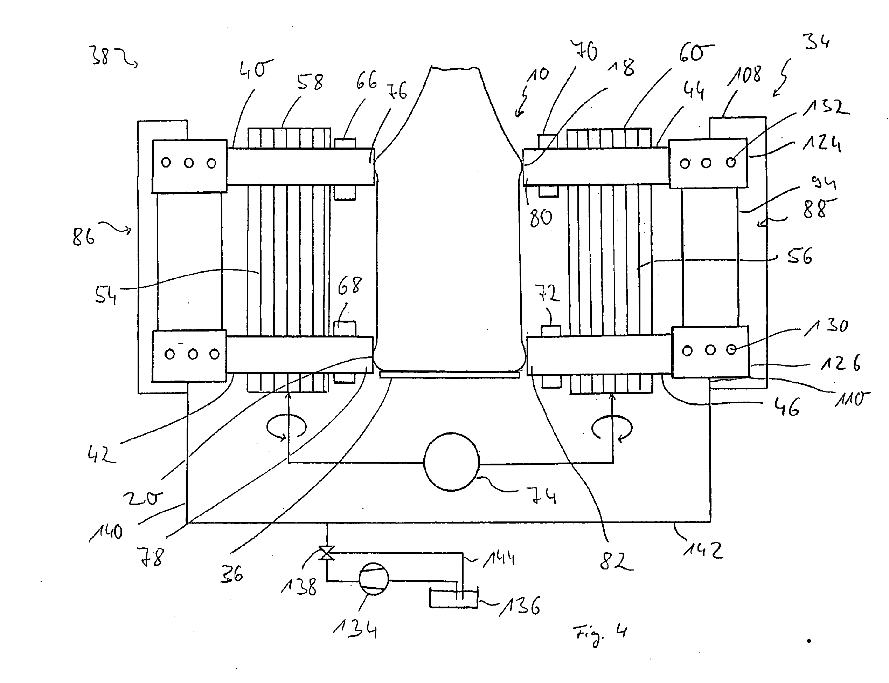

Eine Vorrichtung 34, mit welcher in der vorangehend beschriebenen Art und Weise die Getränkeflaschen 10 mit einem Auftrag überzogen werden können, ist in den Fig. 3 und 4 mit ihren wesentlichen Vorrichtungsbereichen dargestellt. So erkennt man zunächst ein aus einer Vielzahl von Gliedern oder aus elastischem Material aufgebautes Förderband 36, auf welchem die Getränkeflaschen 10 aufrecht stehend nacheinander im Wesentlichen geradlinig in einer Transportrichtung R durch die Vorrichtung 34 hindurchbewegt werden. Es sei hier darauf hingewiesen, dass im Sinne der vorliegenden Erfindung aufrecht stehend nicht notwendigerweise eine exakte vertikale Ausrichtung der Flaschenlängsachsen A bedeutet. Ggf. kann das Förderband 36 bezüglich einer horizontalen Ebene leicht geneigt verlaufen, so dass entsprechend auch die Flaschenlängsachsen A geneigt wären.

Die Vorrichtung 34 umfasst als elementare Baugruppe eine Endlos-Auftrageriemenanordnung 38. Im dargestellten Beispiel weist diese Endlos-Auftrageriemenanordnung 38 vier Endlos-Auftrageriemen 40, 42, 44, 46 auf. Diese Endlos-Auftrageriemen 40, 42, 44, 46 sind jeweils paarweise übereinander angeordnet an beiden Seiten des Förderbands 36, also einander gegenüber liegend bezüglich der Transportrichtung R, angeordnet. Ein in der Darstellung der Fig. 4 links liegendes Endlos-Auftrageriemenpaar umfasst also die Endlos-Auftrageriemen 40, 42. Das an der anderen, also rechten Seite liegende Endlos-Auftrageriemenpaar umfasst die Endlos-Auftrageriemen 44, 46. Die Endlos-Auftrageriemen eines jeweiligen Paares sind in Höhenrichtung so angeordnet, dass sie dort positioniert sind, wo auch ein mit Auftragematerial zu beschichtender Höhenbereich einer Getränkeflasche liegt. Im dargestellten Beispiel sind dies diejenigen. Höhenbereiche der Getränkeflaschen 10, in welchen die wulstartigen Vorsprünge 18, 20 vorhanden sind. Auf diese Art und Weise liegen die Endlos-Auftrageriemen 40 und 44 einander quer zur Transportrichtung R gegenüber, ebenso wie die Endlos-Auftrageriemen 42, 46. Der gegenseitige Abstand dieser einander quer zur Transportrichtung R gegenüber liegenden Endlos-Auftrageriemen 40, 44 bzw. 42, 46 ist derart, dass er geringfügig kleiner ist, als der Durchmesser der zu beschichtenden Getränkeflaschen 10 in dem jeweils zu beschichtenden Höhenbereich.

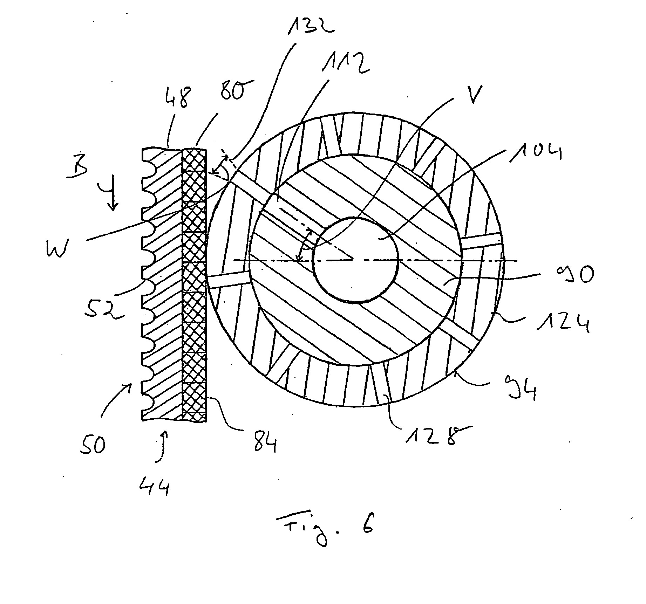

Die Endlos-Auftrageriemen 40, 42, 44, 46 sind, wie dies in der Fig. 6 auch erkennbar ist, als Zahnriemen ausgebildet. Sie weisen einen Riemenkörper 48 aus beispielsweise fasersverstärktem Gummimaterial auf. An einer Rückseite 50 ist eine Verzahnung 52 gebildet, die in Kämmeingriff steht mit einer jeweiligen Verzahnung 54 oder 56 von als Zahnräder ausgebildeten Antriebsrollen 58, 60. Dabei treibt die Antriebsrolle 58 die Endlos-Auftrageriemen 40, 42 an. Die Antriebsrolle 60 treibt die Endlos-Auftrageriemen 44, 46 an. Um eine definierte Höhenpositionierung der Endlos-Auftrageriemen 40, 42, 44, 46 sicherzustellen, könnte daran gedacht werden, die Antriebsrollen 58, 60 nur dort mit einer Verzahnung auszubilden, wo sie auch mit einem jeweiligen Endlos-Auftrageriemen, zusammenwirken, so dass ein Verschieben der Endlos-Auftrageriemen in Richtung der jeweiligen Drehchse der Antriebsrollen 58, 60 nicht möglich ist. Aus Fertigungsgründen kann es jedoch einfacher sein, die Verzahnungen 54, 56 über die gesamten Rollen durchgehend auszugestalten und durch Führungselemente dafür zu sorgen, dass die Endlos-Auftrageriemen 40, 42, 44, 46 sich nicht in Richtung der jeweiligen Drehachse bewegen können.

Jeder Antriebsrolle 58, 60 ist eine Umlenkrolle 62, 64 zugeordnet, die zu dieser in der Transportrichtung R in Abstand angeordnet ist und an welcher ein jeweiliger Endlos-Auftrageriemen 40, 42, 44 bzw. 46 umgelenkt wird. Vorzugsweise ist die Anordnung derart, dass die Antriebsrollen 58, 60 in der Transportrichtung R stromabwärts liegen.

Man erkennt in Fig. 3, dass die Antriebsrollen 58, 60 und die Umlenkrollen 62, 64 quer zur Transporichtung R einen vergleichsweise großen gegenseitigen Abstand aufweisen, insbesondere einen gegenseitigen Abstand, der deutlich größer ist, als der Durchmesser der zu beschichtenden Höhenbereiche der Getränkeflaschen 10. Um den Kontakt der Endlos-Auftrageriemen 40, 42, 44, 46 mit den Getränkeflaschen 10 sicherzustellen, ist in Zuordnung zu jedem Endlos-Auftrageriemen 40, 42, 44, 46 ein langgestrecktes Führungselement 66, 68, 70, 72 vorgesehen. Diese Führungselemente können beispielsweise als Gleitelemente ausgebildet sein und sorgen dafür, dass die Endlos-Auftrageriemen 40, 42, 44, 46 in einem im Wesentlichen geradlinig sich entlang des Förderbands 36 erstreckenden Auftragetransportabschnitt T den vorangehend beschriebenen und im Wesentlichen auf den Außendurchmesser der zu beschichtenden Oberflächenbereiche der Getränkeflaschen 10 abgestimmten gegenseitigen Abstand aufweisen. Vor und hinter dem Auftragetransportabschnitt T bilden durch Zusammenwirken der jeweiligen Antriebs- bzw. Umlenkrollen 58, 60, 62, 64 mit den Führungselementen 66, 68, 70, 72 die Endlos-Auftrageriemen 40, 42, 44, 46 schräg aufeinander zu bzw. voneinander weg verlaufende Abschnitte, in welchen ein allmähliches in Kontakt Treten mit den Getränkeflaschen 10 sowie ein allmähliches Loslösen von den Getränkeflaschen 10 gewährleistet ist.

Den Antriebsrollen 58, 60 sind in der Fig. 4 allgemein mit 74 bezeichnete Antriebsmittel zugeordnet. Diese können in Zuordnung zu jeder Antriebsrolle 58, 60 einen eigenen Antriebsmotor, vorzugsweise Elektromotor, umfassen, oder können einen einzigen Antriebsmotor umfassen, der über geeignete Getriebeeinheiten in Antriebsverbindung mit den beiden Antriebsrollen 58, 60 steht. Dabei sind die Antriebsmittel 74 so ausgebildet, dass sie entweder durch entsprechende Erregung oder durch Ausgestaltung der Getriebeeinheiten die beiden Antriebsrollen 58, 60 mit unterschiedlicher Drehgeschwindigkeit bewegen. Dies führt dazu, dass die an den beiden Seiten des Förderbands 36 jeweils liegenden Endlos-Auftrageriemen 40, 42 einerseits und 44, 46 andererseits sich auch mit unterschiedlicher Geschwindigkeit bewegen werden. Werden beispielsweise die Endlos-Auftrageriemen 44, 46 schneller bewegt, als die Endlos-Auftrageriemen 40, 42, so werden auf Grund der vorhandenen Differenzgeschwindigkeit und auf Grund der Tatsache, dass all diese Endlos-Auftragriemen in Kontakt mit den zu beschichtenden Getränkeflaschen 10 stehen, die Getränkeflaschen 10 in Drehung versetzt, wie dies in Fig. 3 veranschaulicht ist. Durch diese Drehung wird sichergestellt, dass nicht nur der beim Eintritt der Getränkeflaschen 10 in den Auftragetransportabschnitt T in Kontakt mit den Endlos-Auftrageriemen 40, 42, 44, 46 tretende Umfangsbereich der wulstartigen Vorsprünge 18, 20 beschichtet wird, sondern dass bei geeigneter Einstellung der Differenzgeschwindigkeit die Getränkeflaschen 10 über den gesamten Umfang im jeweils vorgegebenen Höhenbereich beschichtet werden. Dazu ist es vorteilhaft, die Differenzgeschwindigkeit so auf die Länge des Auftragetransportabschnitts T und auch die Bewegungsgeschwingdigkeit des Förderbands 36 abzustimmen, dass die Getränkeflaschen 10 sich beim Durchlauf durch den Auftragetransportabschnitt T um wenigstens 180° drehen. Dies hat zur Folge, dass eine Hälfte des Umfangs der Getränkeflaschen 10 durch die Endlos-Auftrageriemen 40, 42 beschichtet wird, während die andere Hälfte des Umfangs durch die Endlos-Auftrageriemen 44, 46 beschichtet wird. Selbstverständlich ist es auch möglich, zum Erhöhen der Beschichtungseffizienz beispielsweise eine Rotation um 360° zu erzeugen, so dass jeder Umfangsbereich durch zwei bezüglich der Transportrichtung R einander gegenüber liegende Endlos-Auftrageriemen beschichtet wird.

Bei der Vorgabe der Geschwindigkeit der Endlos-Auftrageriemen 40, 42, 44, 46 sollte darauf geachtet werden, dass diese auch abgestimmt ist auf die Bewegungsgeschwindigkeit des Förderbands 36. So kann es vorteilhaft sein, dass die Durchschnittsgeschwindigkeit der Endlos-Auftrageriemen 40, 42, 44, 46 der Bewegungsgeschwindigkeit des Förderbands 36 entspricht, also die schneller laufenden Endlos-Auftrageriemen 44, 46 um eine vorbestimmte Geschwindigkeitsdifferenz schneller laufen, als das Förderband 36, während die langsamer laufenden Endlos-Auftrageriemen 40, 42 um die gleiche Geschwindigkeitsdifferenz langsamer laufen. Dies führt dazu, dass die Getränkeflaschen 10 weiterhin ohne Schlupf in der Transportrichtung R bezüglich des Förderbands 36 durch die Vorrichtung 34 hindurchbewegt werden und lediglich auf dem Förderband 36 gedreht werden.

Um mit der erfindungsgemäßen Vorrichtung 34 und insbesondere den Endlos-Auftrageriemen 40, 42, 44, 46 der Endlos-Auftrageriemenanordnung die Getränkeflaschen 10 mit Auftragematerial beschichten zu können, weist jeder Endlos-Auftrageriemen 40, 42, 44, 46 einen mit dem flüssigen Auftragematerial tränkbaren, vorzugsweise schwammartigen Auftrageriemenbereich 76, 78, 80, 82 auf. Dieser mit flüssigem Auftragematerial tränkbare Auftrageriemenbereich 76, 78, 80, 82 ist beispielsweise durch Verklebung auf dem jeweiligen Riemenkörper (48 im Falle des Endlos-Auftrageriemens 44) an der in Kontakt mit den Getränkeflaschen 10 tretenden Seite angebracht. Wie in Fig. 6 anhand des Auftrageriemenbereichs 80 verdeutlicht, sind diese aus einer Vielzahl von in der Längsrichtung der jeweiligen Endlos-Auftrageriemen 40, 42, 44, 46 aufeinander folgenden Segmenten 84 gebildet. Diese Segmente 84 können einzeln an dem Riemenkörper 48 festgelegt werden. Alternativ ist es möglich, einen durchgehenden Abschnitt aufzubringen und diesen dann durch eine Einschneidebearbeitung in die einzelnen Segmente 84 zu unterteilen. Dabei kann der jeweilige Schritt zum Trennen zweier Segmente 84 sich über die ganze Dicke des jeweiligen Auftrageriemenbereichs 76, 78, 80, 84, also bis zum Riemenkörper 48 hindurch, erstrecken. Alternativ ist es auch möglich, einen derartigen Einschnitt nur in einem Dickenbereich vorzusehen, beispielsweise bis zur Dickenhälfe. Da die einzelnen Segmente 84 vergleichsweise kurz sind, und eine Länge im Bereich von 1 bis 3 cm haben können, wird somit beim Umlenken der Endlos-Auftrageriemen 40, 42, 44, 46 an den Rollen 58, 60, 62, 64 eine übermäßige Dehnung des elastischen, schwammartigen Materials der Auftrageriemenbereiche 76, 78, 80, 82 vermieden.

Wie bereits vorangehend ausgeführt, sind im Auftragetransportabschnitt T die Endlos-Auftrageriemen 40, 42, 44, 46 so angeordnet, dass ein zuverlässiger Kontakt derselben mit den zu beschichtenden Höhenbereichen der Getränkeflaschen 10, also den wulstartigen Vorsprüngen 18, 20, sichergestellt ist. Da die Auftrageriemenbereiche 76, 78, 80, 82 elastisch komprimierbar sind, ist vorzugsweise der gegenseitige Abstand der quer zur Transportrichtung R einander gegenüber liegenden Endlos-Auftragriemen 40, 42, 44, 46 so gewählt, dass der lichte Abstand zwischen den Oberflächen der einander gegenüber liegenden Auftrageriemenbereiche 76, 80 einerseits und 78, 82 andererseits etwas kleiner ist, als der Durchmesser der Getränkeflaschen 10 im Bereich der wulstartigen Vorsprünge 18, 20. Die in diesen Bereichen an den Getränkeflaschen 10 dann angreifenden Auftrageriemenbereiche 76, 78, 80, 82 werden beim Kontakt mit den Getränkeflaschen 10 dann leicht komprimiert, was nicht nur den geeigneten Reibschluss auch zum Drehen der Getränkeflaschen 10 sicherstellt, sondern auch dafür sorgt, dass in dem schwammartigen Material der Auftrageriemenbereiche 76, 78, 80, 82 enthaltenes flüssiges Auftragematerial herausgepresst und auf die Oberflächen der Getränkeflaschen 10 übertragen wird.

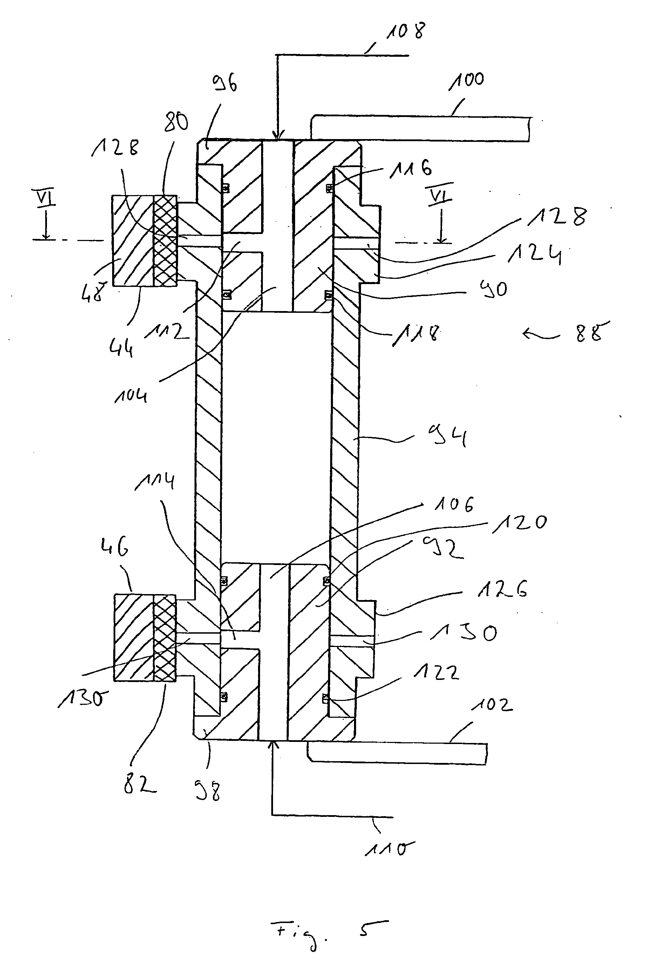

Um die Auftrageriemenbereiche 76, 78, 80, 82 mit dem flüssigen Auftragemittel zu tränken, sind diesen Auftragemitteln in Form von Drehrohrverteilern 86, 88 zugeordnet. Wie man in Fig. 5 erkennt, kann dabei die Anordnung derart sein, dass jeweils ein derartiger Drehrohrverteiler 86 die Funktion des Einspeisens von flüssigem Auftragematerial in zwei übereinander angeordnete Auftrageriemenbereiche 80, 82 erfüllt und zwar in einem außerhalb des Auftragetransportabschnitts T liegenden, rückwärtigen Bereich. Da die Auftragemittel bzw. Drehrohrverteiler 86, 88 für die paarweise übereinander angeordneten Endlos-Auftragriemen 40, 42 bzw. 44, 46 grundsätzlich von gleichem Aufbau sein können, wird dieser Aufbau nachfolgend mit Bezug auf den Drehrohrverteiler 88 für die Endlos-Auftragriemen 44, 46 bzw. die an diesen vorgesehenen Auftrageriemenbereiche 80, 82 mit Bezug auf die Fig. 5 und 6 erläutert.

Man erkennt zunächst, dass in Zuordnung zu jedem Auftrageriemenbereich 80, 82 der Drehrohrverteiler 88 jeweils ein Zentralrohr 90 bzw. 92 aufweist. Diese liegen näherungsweise auch in dem Höhenbereich der mit Auftragematerial zu speisenden Auftrageriemenbereiche 80, 82. Eine Rotationshülse 94 ist über die beiden Zentralrohre 90, 92 geführt und weist eine derartige Länge auf, dass sie sich in vertikaler Richtung über die Auftrageriemenbereiche 80, 82 hinaus erstreckt. Die Rotationshülse 94 ist zwischen Umfangsvorsprüngen 96, 98 der beiden Zentralrohre 90, 92 gehalten. Da weiterhin jedes der Zentralrohre 90, 92 durch einen jeweils zugeordneten Träger 100 bzw. 102 an einem Aufbau der Vorrichtung 34 getragen ist, ist somit auch eine definierte Positionierung der Rotationshülse 94 vorgegeben.

Die Zentralrohre 90, 92 weisen jeweils eine in Längsrichtung durch diese hindurch sich erstreckende Einleitöffnung 104 bzw. 106 auf, in welche jeweils von einer Versorgungsleitung 108 bzw. 110 das flüssige Auftragematerial eingeleitet wird. Abzweigend von einer jeweiligen Einleitöffnung 104 bzw. 106 ist in den Zentralrohren 90, 92 an einer Umfangsposition eine nach radial außen sich erstreckende Abgabeöffnung 112 bzw. 114 vorgesehen. Um einen flüssigkeitsdichten Abschluss der Zentralrohre 90, 92 bezüglich der Rotationshülse 94 zu schaffen, können diese jeweils beidseits der Abgabeöffnungen 112, 114 durch O-ringartige Dichtelemente 116, 118, 120, 122 flüssigkeitsdicht abgeschlossen sein.

Im Bereich jeder Abgabeöffnung 112, 114 der Zentralrohre 90, 92, welche auch im Höhenbereich der zu speisenden bzw. zu tränkenden Auftrageriemenbereiche 80, 82 positioniert sind, weist die Rotationshülse 94 jeweils einen ringartigen Umfangsvorsprung 124 bzw. 126 auf. Diese Umfangsvorsprünge 124, 126 können eine etwas aufgerauhte Umfangsfläche bereitstellen, welche in Kontakt mit den Auftrageriemenbereichen 80, 82 ist. Bei Bewegung der Endlos-Auftrageriemen 44, 46 wird somit auch durch den Kontakt mit den Auftrageriemenbereichen 80, 82 die Rotationshülse 94 zur Drehung um die Zentralrohre 90, 92 angetrieben. Es ist somit nicht erforderlich, für die Rotationshülse 94 einen eigenständigen Antrieb vorzusehen.

In jedem der Umfangsvorsprünge 124, 126 sind im Bereich der Abgabeöffnungen 112 bzw. 114 mehrere nach radial außen sich erstreckende und vorzugsweise in gleichmäßigem Umfangsabstand liegende Einspeiseöffnungen 128 bzw. 130 vorgesehen. Diese sind zum Außenumfang der Umfangsvorsprünge 124, 126 offen.

Bei Bewegung der Endlos-Auftrageriemen 44, 46 und der dabei induzierten Drehung der Rotationshülse 94 bewegen die Einspeiseöffnungen 128, 130 sich über den Außenumfang der Zentralrohre 90, 92, so dass phasenweise jeweils eine der Einspeiseöffnungen 128, 130 mit der Abgabeöffnung 112 oder 114 der Zentralrohre 90, 92 ausgerichtet ist bzw. sich zumindest teilweise damit überlappt. In dieser Phase wird dann das unter einem vorbestimmten Druck zugeführte flüssige Auftragematerial 132 aus jeweils einer der Einspeiseöffnungen 128 bzw. 130 ausgestoßen und in das schwammartige Material des jeweils zugeordneten Auftrageriemenbereichs 80 bzw. 82 eingespeist.

Die Zentralrohre 90, 92 sind an den zugeordneten Trägern 100, 102 in ihrer Lage verstellbar getragen, so dass der Winkel der Abgabeöffnungen 112, 114 bezüglich der Oberflächen der Auftragriemenbereiche 80, 82 bzw. einer dazu orthogonalen Ebene variiert werden kann. Dies ist in Fig. 6 verdeutlicht. Die Orientierung der Abgabeöffnungen 112, 114 wird dabei vorzugsweise derart gewählt, dass das Auftragematerial 132 durch eine jeweilige Einspeiseöffnung 128 bzw. 130 an einer Position ausgestoßen wird, an welcher ein jeweiliger Umfangsvorsprung 124 bzw. 126 nicht in Kontakt mit dem jeweils zugeordneten Auftrageriemenbereich 80, 82 steht. Hier hat es sich hinsichtlich der Einspeiseeffizienz als vorteilhaft erwiesen, die Positionierung der Abgabeöffnungen 112, 114 so zu wählen, dass das Auftragematerial 132 an einer bezüglich der Bewegungsrichtung B der Auftrageriemenbereiche 80 bzw. 82 und bezüglich derjenigen Positionierung, an welcher ein jeweiliger Umfangsvorsprung 124, 126 den zugeordneten Auftragriemenbereich 80 bzw. 82 kontaktiert, stromaufwärts ausgestoßen wird. Der hier gewählte Vorlaufwinkel V kann auch unter Berücksichtigung des beim Ausstoßen des Auftragematerials 132 aus den Einspeiseöffnungen 128, 130 gebildeten Ausstoßwinkels W und dem gegenseitigen Umfangsabstand der Einspeiseöffnungen 128, 130 so gewählt werden, dass trotz des bei der Rotation der Rotationshülse 94 erzeugten intermittierenden Ausstoßens eine im Wesentlichen durchgängige Tränkung der Auftrageriemenbereiche 80, 82 erzeugt wird. Da diese aus schwammartigem, porösem Material aufgebaut sind, wird sich selbstverständlich das flüssige Auftragematerial 132 insbesondere auch durch Kapillarförderwirkung in möglicherweise vorhandene Längenbereiche bewegen, die nicht ausreichend getränkt worden sind.

Die Versorgung der beiden Drehrohrverteiler 86, 88 mit dem flüssigen Auftragematerial 132 erfolgt beispielsweise über eine gemeinsame Pumpe 134, welche das flüssige Auftragematerial 132 aus einem Reservoir 136 abzieht und über ein vorzugsweise einstellbares Druckregulatorventil 138 und Versorgungsleitungen 140, 142 dieses dann zu den Drehrohrverteilern 86, 88 fördert. Vom Druckregulatorventil 138 kann eine Rücklaufleitung 144 zum Reservoir 136 zurückführen, über welche überschüssiges Auftragematerial wieder zurückgespeist wird.

Die Menge des in Richtung zu den Drehrohrverteilern 88 geförderten flüssigen Auftragematerials wird vorzugsweise auch abgestimmt auf die Bewegungsgeschwindigkeit der Endlos-Auftrageriemen 40, 42, 44, 46. Bewegen diese sich schneller, bedeutet dies, dass auch mehr flüssiges Auftragematerial zu den Drehrohrverteilern 86, 88 gefördert werden muss, um eine ausreichede Tränkung der Auftrageriemenbereiche 76, 78, 80, 82 zu gewährleisten. Beispielsweise kann die Förderkapazität der Pumpe 134 auf die Drehgeschwindigkeit der Antriebsrollen 58, 60 abgestimmt werden, oder, es kann durch entsprechende Einstellung des Druckregulatorventils 138 ein in Zuordnung zu einer jeweiligen Bewegungsgeschwindigkeit ausgewählter Druck für die Einspeisung des flüssigen Auftragematerials 132 in die Drehrohrverteiler 86, 88 gewählt werden. Insbesondere kann dafür gesorgt werden, dass dann, wenn die Antriebsrollen 58, 60 und auch das Förderband 36 sich nicht bewegen, die Pumpe 134 abgestellt wird.

Das zum Beschichten der Getränkeflaschen 10 verwendete flüssige Auftragematerial ist vorzugsweise eine Mischung aus Wachs, Wasser und Emulgatoren. Die Emulgatoren sorgen dafür, dass das Wachs im Wasser gelöst bleibt. Das Auftragematerial muss lebensmittelecht sein, um die Gefahr einer Kontaminierung der in den Getränkeflaschen 10 enthaltenen Flüssigkeit zu vermeiden.

Mit der vorangehend detailliert beschriebenen Vorrichtung 34 wird es also möglich, in zuverlässiger Art und Weise ausgewählte Höhenbereiche von Getränkeflaschen über den gesamten Umfang mit einem Auftragematerial zu überziehen. Dieser Vorgang kann auf Grund der Möglichkeit, sehr exakt nur ausgewählte Höhenbereiche zu beschichten, auch nach dem Etikettieren von Getränkeflaschen 10 erfolgen, ohne dass die Gefahr der Beschädigung der bereits auf die Getränkeflaschen 10 aufgebrachten Etiketten besteht. Die erfindungsgemäße Vorrichtung kann, wie in Fig. 2 verdeutlicht, in einfacher Art und Weise, in den Bearbeitungsprozess der Getränkeflaschen 10 integriert werden.

Es ist selbstverständlich, dass die vorangehend beschriebene Vorrichtung in verschiedensten Aspekten variiert werden kann. So könnten beispielsweise die jeweils an separaten und übereinander angeordneten Endlos-Auftrageriemen vorgesehenen Auftrageriemenbereiche auch jeweils an einem dann deutlich breiter gestalteten Riemen angeordnet sein. Auch ist es möglich, die einzelnen Segmente der Auftrageriemenbereiche mit geringfügigem gegenseitigen Abstand am jeweiligen Riemenkörper vorzusehen. Auf Grund der Kompression beim Kontakt mit den Getränkeflaschen werden diese Zwischenräume geschlossen und eine vollständige Beschichtung der gesamten Flaschenumfänge gewährleistet. Weiter ist es selbstverständlich möglich, dass mit der erfindungsgemäßen Vorrichtung auch Flaschen beschichtet werden können, bei welchen die in verschiedenen Höhenbereichen liegenden zu beschichtenden Oberflächenbereiche nicht den gleichen Außenumfang aufweisen. Hierzu ist es lediglich erforderlich, durch entsprechende Positionierung der den jeweiligen Endlos-Auftrageriemen zugeordneten Führungselemente quer zur Transportrichtung oder/und durch Auswahl der Dicke der Auftrageriemenbereiche eine entsprechende Anpassung vorzunehmen. Weiter ist es selbstverständlich, dass zum Gewährleisten eines sicheren Transports der Getränkeflaschen 10 vor bzw. auch nach dem Auftragetransportabschnitt T an beiden Seiten des Förderbands 36 Führungsschienen 146 bzw. 148 vorgesehen sein können, die ein seitliches Abkippen der Getränkeflaschen 10 vermeiden.

Bei einer vereinfachten Ausgestaltungsvariante könnte die erfindungsgemäße Vorrichtung 34 auch derart aufgebaut sein, dass nur an einer Seite bezüglich der Transportrichtung R ein oder mehrere Auftrageriemenbereiche vorgesehen sind. An der anderen Seite könnte zur Abstützung der Getränkeflaschen 10 dann eine Führungsschiene verlaufen. Obgleich das Vorsehen von Auftragriemenbereichen an beiden Seiten auf Grund der erreichbaren Effizienz und der Möglichkeit, die gesamte Vorrichtung 34 vergleichsweise kurz auszugestalten, gleichwohl jedoch den gesamten Umfang der Getränkeflaschen 10 beschichten zu können, vorteilhaft ist, kann auch bei nur an einer Seite vorgesehenen Auftragriemenbereichen durch entsprechende Bewegungsgeschwindigkeit derselben eine Rotation der Getränkeflaschen 10 erzwungen und mithin eine Beschichtung der Umfangsbereiche derselben erreicht werden.

## Patentansprüche

1. Vorrichtung zum Aufbringen eines das Erscheinungsbild der Oberflächen wiederverwendbarer Getränkeflaschen (10) verbessernden Auftrags, wobei die Vorrichtung (34) eine Endlos-Auftrageriemenanordnung (38) umfasst, welche in einem Auftragetransportabschnitt (T) mit der Oberfläche der aufrecht stehend in einer Transportrichtung (R) bewegten Flaschen (10) in Kontakt kommt und dabei in der Auftrageriemenanordnung (38) enthaltenes Auftragematerial (132) auf die Flaschenoberflächen überträgt, wobei die Endlos-Auftrageriemenanordnung (38) wenigstens einen mit dem Auftragematerial (132) tränkbaren, in Kontakt mit den Flaschenoberflächen kommenden Auftrageriemenbereich (76, 78, 80, 82) umfasst, **dadurch gekennzeichnet, dass** jeder Auftrageriemenbereich (76, 78, 80, 82) eine Vielzahl von in einer Riemenlängsrichtung aufeinander folgenden Auftragesegmenten (84) umfasst.

2. Vorrichtung nach Anspruch 1,
**dadurch gekennzeichnet, dass** der Auftrageriemenbereich (76, 78, 80, 82) schwammartig ist.

3. Vorrichtung nach Anspruch 1 oder 2,
**dadurch gekennzeichnet, dass** in Zuordnung zu jedem mit Auftragematerial (132) zu beschichtenden Höhenbereich der Flaschenoberflächen die Endlos-Auftrageriemenanordnung (38) wenigstens einen Auftrageriemenbereich (76, 78, 80, 82) aufweist.

4. Vorrichtung nach Anspruch 3,
**dadurch gekennzeichnet, dass** unterschiedlichen Höhenbereichen der Flaschenoberflächen zugeordnete Auftrageriemenbereiche (76, 78, 80, 82) in dem Höhenabstand der Höhenbereiche entsprechendem Abstand übereinander angeordnet sind.

5. Vorrichtung nach einem der Ansprüche 1 bis 4,
**dadurch gekennzeichnet, dass** an beiden Seiten bezüglich der Transportrichtung (R) jeweils wenigstens ein Auftrageriemenbereich (76, 78, 80, 82) vorgesehen ist.

6. Vorrichtung nach Anspruch 5,
**dadurch gekennzeichnet, dass** der Abstand von quer zur Transportrichtung (R) einander gegenüber liegenden Auftrageriemenbereichen (76, 78, 80, 82) höchstens dem Durchmesser der in der Transportrichtung (R) bewegten Flaschen in dem jeweils zu beschichtenden Höhenbereich entspricht.

7. Vorrichtung nach Anspruch 5 oder 6,
**dadurch gekennzeichnet, dass** die an beiden Seiten bezüglich der Transportrichtung (R) vorgesehenen Auftrageriemenbereiche (76, 78, 80, 82) mit zueinander unterschiedlichen Bewegungsgeschwindigkeiten antreibbar sind.

8. Vorrichtung nach Anspruch 7,
**dadurch gekennzeichnet, dass** die Auftrageriemenbereiche (76, 78, 80, 82) mit derart unterschiedlichen Bewegungsgeschwindigkeiten antreibbar sind, dass durch den Kontakt der Auftrageriemenbereiche (76, 78, 80, 82) mit den zu beschichtenden Flaschen (10) die Flaschen (10) in Rotation um ihre Längsachse (A) versetzt werden und bei Bewegung durch den Auftragetransportabschnitt (T) jeder zu beschichtende Höhenbereich über den gesamten Flaschenumfang durch wenigstens einen der Auftrageriemenbereiche (76, 78, 80, 82) beschichtet wird.

9. Vorrichtung nach einem der Ansprüche 1 bis 8,
**dadurch gekennzeichnet, dass** jeder Auftrageriemenbereich (76, 78, 80, 82) an einem separaten Endlos-Auftrageriemen (40, 42, 44, 46) vorgesehen ist.

10. Vorrichtung nach einem der Ansprüche 1 bis 8,
**dadurch gekennzeichnet, dass** an einem Endlos-Auftrageriemen mehrere, vorzugsweise zwei, übereinander angeordnete Auftrageriemenbereiche vorgesehen sind.

11. Vorrichtung nach Anspruch 9 oder 10,
**dadurch gekennzeichnet, dass** jeder Endlos-Auftrageriemen (40, 42, 44, 46) als Zahnriemen mit einem Riemenkörper (48) ausgebildet ist, der an einer Rückseite (50) mit einer Verzahnung (52) zum Antriebseingriff mit einem Antriebszahnrad (58, 60) ausgebildet ist und an einer Auftrageseite wenigstens einen Auftrageriemenbereich (76, 78, 80, 82) aufweist.

12. Vorrichtung nach einem der Ansprüche 1 bis 11,
**dadurch gekennzeichnet, dass** jedem Auftrageriemenbereich (76, 78, 80, 82) Auftragematerialeinspeisemittel (86, 88) zugeordnet sind zum Einspeisen von flüssigem Auftragematerial (132) in diesen.

13. Vorrichtung nach Anspruch 12,
**dadurch gekennzeichnet, dass** die Auftragematerialeinspeisemittel (86, 88) ein im Einspeisebetireb im Wesentlichen feststehendes Zentralrohr (90, 92) mit wenigstens einer Radialabgabeöffnung (112, 114) aufweist, sowie eine das Zentralrohr (90, 92) umgebende Rotationshülse (94), welche im Einspeisebetrieb um das Zentralrohr (90, 92) rotiert und eine Mehrzahl von bei der Rotation zeitweise mit der wenigstens einen Radialabgabeöffnung (112, 114) sich überlappenden Ausstoßöffnungen (128, 130) aufweist.

14. Vorrichtung nach Anspruch 13,
**dadurch gekennzeichnet, dass** die Rotationshülse (94) in Kontakt mit wenigstens einem Auftrageriemenbereich (76, 78, 80, 82) ist und durch diesen zur Drehung angetrieben ist.

15. Vorrichtung nach Anspruch 13 oder 14,
**dadurch gekennzeichnet, dass** ein Abgabewinkel (V) der wenigstens einen Radialabgabeöffnung (112, 114) bezüglich des zugeordneten Auftrageriemenbereichs (76, 78, 80, 82) veränderbar ist.

16. Vorrichtung nach einem der Ansprüche 13 bis 15,
**dadurch gekennzeichnet, dass** eine Auftragematerialversorgung (134, 136, 138) flüssiges Auftragematerial (132) in das Zentralrohr (90, 92)einspeist.

17. Vorrichtung nach einem der Ansprüche 1 bis 16,
**dadurch gekennzeichnet, dass** ein Förderband (36) vorgesehen ist, welches die zu beschichtenden Flaschen (10) aufrecht stehend durch den Auftragetransportabschnitt (T) hindurchbewegt.

18. Verfahren zum Aufbringen eines das Erscheinungsbild der Oberflächen wiederverwendbarer Getränkeflaschen (T) verbessernden Auftrags, wobei das Verfahren die Maßnahmen umfasst:
a) Bewegen der Flaschen (10) in aufrecht stehendem Zustand in einer Transportrichtung (R) durch einen Auftragetransportabschnitt (T),
b) im Auftragetransportabschnitt (T) Berühren eines mit dem Auftragematerial zu beschichtenden Höhenbereichs der Flaschen (10) mit wenigstens einem im Auftragetransportabschnitt (T) sich in der Transportrichtung (R) bewegenden und eine Vielzahl von in einer Riemenlängsrichtung aufeinander folgenden Auftragesegmenten (84) umfassenden Auftrageriemenbereich (76, 78, 80, 82) und dabei Übertragen von im Auftrageriemenbereich (76, 78, 80, 82) enthaltenem Auftragematerial (132) auf die Flaschenoberflächen.

19. Verfahren nach Anspruch 18,
**dadurch gekennzeichnet, dass** bei der Bewegung durch den Auftragetransportabschnitt (T) die Flaschen (10) um ihre Flaschenlängsachse (A) gedreht werden.

20. Verfahren nach Anspruch 19,
**dadurch gekennzeichnet, dass** die Flaschen (10) an beiden Seiten bezüglich der Transportrichtung (R) durch jeweils wenigstens einen Auftrageriemenbereich (76, 78, 80, 82) berührt werden, wobei diese an beiden Seiten bezüglich der Transportrichtung (R) vorgesehenen Auftragetriemenbereiche (76, 78, 80, 82) sich mit unterschiedlicher Geschwindigkeit in der Transportrichtung (R) bewegen und eine der Differenzgeschwindigkeit entsprechende Rotation der Flaschen (10) erzeugen.

21. Verfahren nach Anspruch 20,
**dadurch gekennzeichnet, dass** die Differenzgeschwindigkeit derart eingestellt wird, dass bei Hindurchbewegung durch den Auftragetransportabschnitt (T) die Flaschen (10) in einem Winkelbereich von wenigstens etwa 180° gedreht werden.

22. Verfahren nach einem der Ansprüche 18 bis 21,
**dadurch gekennzeichnet, dass** in einem Bereich außerhalb des Auftragetransportabschnitts (T) flüssiges Auftragematerial (132) in den wenigstens einen Auftrageriemenbereich (76, 78, 80, 82) eingespeist wird.

23. Verfahren nach einem der Ansprüche 18 bis 22,
**dadurch gekennzeichnet, dass** als flüssiges Auftragemittel (132) ein Gemisch aus Wachs, Wasser und Emulgatoren verwendet wird.

## Claims

1. A device for applying an application improving the appearance of the surfaces of reusable bottles (10) for drinks, the device (34) comprising a continuous application belt arrangement (38) which, in an application transport section (T), is getting into contact with the surface of the bottles (10) standing upright and being advanced in a transport direction (R) and which transfers application material (132) comprised in the application belt arrangement (38) to the bottle surfaces, the continuous application belt arrangement (38) comprising at least one application belt section (76, 78, 80, 82) impregnatable with the application material (132) and getting into contact with the bottle surfaces, **characterized in** each application belt section (76, 78, 80, 82) comprising a plurality of application segments (84) succeeding each other in a longitudinal direction of the belt.

2. A device according to claim 1,
**characterized in** the application belt section (76, 78, 80, 82) being sponge-like.

3. A device according to claim 1 or 2,
**characterized in** the continuous application belt arrangement (38) comprising at least one application belt section (76, 78, 80, 82) associated to each height range of the bottles surfaces to be coated with application materials (132).

4. A device according to claim 3,
**characterized in** the application belt sections (76, 78, 80, 82) associated to different height ranges of the bottle surfaces being arranged one upon the other with the distances corresponding to the height distance of the height ranges.

5. A device according to one of claims 1 to 4,
**characterized in** at least one application belt section (76, 78, 80, 82) being provided at both sides in relation to the direction of transport (R) respectively.

6. A device according to claim 5,
**characterized in** the distance of application belt sections (76, 78, 80, 82) located opposite to each other perpendicular to the direction of transport (R) corresponding at most to the diameter of the bottles advanced in the direction of transport (R) in the respective height range to be coated.

7. A device according to claim 5 or 6,
**characterized in** the application belt sections (76, 78, 80, 82) provided at both sides in relation to the direction of transport (R) being drivable with motion speeds different to each other.

8. A device according to claim 7,
**characterized in** the application belt sections (76, 78, 80, 82) being drivable with different motion speeds so that via the contact between the application belt sections (76, 78, 80, 82) and the bottles (10) to be coated, the bottles (10) start to rotate about their longitudinal axis (A), and in each height range to be coated being coated over the whole bottle circumference by at least one of the application belt sections (76, 78, 80, 82) when moved through the application transport section (T).

9. A device according to one of claims 1 to 8,
**characterized in** each application belt section (76, 78, 80, 82) being provided at a separate continuous application belt (40, 42, 44, 46).

10. A device according to one of claims 1 to 8,
**characterized in** several, preferably two, application belt sections arranged one upon the other are provided at one continuous application belt.

11. A device according to claim 9 or 10,
**characterized in** each continuous application belt (40, 42, 44, 46) being formed as a gear belt having a belt body (48) formed at a back side (50) with gear teeth (52) for drive engagement with a driving gearwheel (58, 60) and having at least one application belt section (76, 78, 80, 82) at an application side.

12. A device according to claim 1 to 11,
**characterized in** application material insertion means (86, 88) being associated to each application belt section (76, 78, 80, 82) for inserting liquid application material (132) into the latter.

13. A device according to claim 12,
**characterized in** the application material insertion means (86, 88) comprising a central tube (90, 92) with at least one radial dispensing opening (112, 114) being substantially stationary during the insertion procedure, as well as a rotation sleeve (94) surrounding the central tube (90, 92), rotating around the central tube (90, 92) during the insertion procedure and comprising a plurality of discharge openings (128, 130) overlapping temporarily with the at least one radial dispensing opening (112, 114).

14. A device according to claim 13,
**characterized in** the rotation sleeve (94) being in contact with at least one application belt section (76, 78, 80, 82) and being driven to rotation by the latter.

15. A device according to claim 13 or 14,
**characterized in** a dispensing angle (V) of the at least one radial dispensing opening (112, 114) being variable in relation to the associated application belt section (76, 78, 80, 82).

16. A device according to one of claims 13 to 15,
**characterized in** an application material supply (134, 136, 138) inserting liquid application material (132) into the central tube (90, 92).

17. A device according to one of claims 1 to 16,
**characterized in** a conveyor belt (36) being provided for moving the bottles (10) to be coated in an upright position through the application transport section (T).

18. A method for applying an application improving the appearance of the surfaces of reusable bottles for drinks (T), the method comprising the following steps:
a) Moving the bottles (10) in a transport direction (R) through an application transport section (T) in an upright position,
b) In the application transport section (T), assuring a contact between a height section of the bottles (10) to be coated with the application material and at least one application belt section (76, 78, 80, 82) moving in the transport direction (R) in the application transport section (T) and comprising a plurality of application segments (84) succeeding in a longitudinal direction of the belt, and therewith transferring application material (132) contained in the application belt section (76, 78, 80, 82) to the bottle surfaces.

19. A method according to claim 18,
**characterized in** the bottles (10) being rotated about their longitudinal axis (A) when moving through the application transport section (T).

20. A method according to claim 19,
**characterized in** the bottles (10) being contacted by at least one application belt section (76, 78, 80, 82) on both sides in relation to the transport direction (R), the application belt sections (76, 78, 80, 82) being provided on both sides in relation to the transport direction (R) moving in the transport direction (R) with different speeds and producing a rotation of the bottles (10) corresponding to the differential speed.

21. A method according to claim 19,
**characterized in** the differential speed being set such that the bottles (10) are rotated in an angular range of at least about 180 ° when moving through the application transport section (T).

22. A method according to one of claims 18 to 21,
**characterized in** liquid application material (132) being inserted into the at least one application belt section (76, 78, 80, 82) in an area outside of the application transport section (T).

23. A method according to one of claims 18 to 21,
**characterized in** a mixture of wax, water and emulsifiers being used as liquid application medium (132).

## Revendications

1. Dispositif pour appliquer une application améliorant l'apparence des surfaces de bouteilles (10) réutilisables pour boissons, le dispositif (34) comprenant un arrangement de courroies d'application continu (38), venant en contact avec la surface des bouteilles (10) passant en position verticale par une section de transport et d'application (T) et transférant du matériel d'application (132) contenu dans l'arrangement de courroies d'application continu (38) aux surfaces des bouteilles, l'arrangement de courroies d'application continu (38) comprenant une section de courroies d'application (76, 78, 80, 82) imprégnable avec le matériel d'application (132) et entrant en contact avec les surfaces des bouteilles, **caractérisé par** chaque section de courroies d'application (76, 78, 80, 82) comprenant une pluralité d'éléments d'application (84) se succédant dans la direction longitudinale des courroies.

2. Dispositif selon la revendication 1,
**caractérisé par** la section de courroies d'application (76, 78, 80, 82) étant spongieuse.

3. Dispositif selon la revendication 1 ou 2,
**caractérisé par** l'arrangement de courroies d'application continu (38) comprenant au moins une section de courroies d'application (76, 78, 80, 82) associée à chaque niveau de hauteur des surfaces de bouteille à recouvrir par le matériel d'application (132).

4. Dispositif selon la revendication 3,
**caractérisé par** les sections de courroies d'application (76, 78, 80, 82) associées à des niveaux d'hauteur différents des surfaces des bouteilles étant arrangées superposées avec des distances correspondant aux distances entre les différents niveaux d'hauteur.

5. Dispositif selon une des revendications 1 à 4,
**caractérisé par** au moins une section de courroies d'application (76, 78, 80, 82) étant prévu sur les deux côtés par rapport à la direction de transport (R).

6. Dispositif selon la revendication 5,
**caractérisé par** la distance entre des sections de courroies d'application (76, 78, 80, 82) étant arrangées l'une en face de l'autre de travers à la direction de transport (R) correspondant au maximum au diamètre des bouteilles avancées dans la direction de transport (R) dans le niveau de hauteur à recouvrir.

7. Dispositif selon la revendication 5 ou 6,
**caractérisé par** les sections de courroies d'application (76, 78, 80, 82) prévues sur les deux côtés par rapport à la direction de transport (R) peuvent être entraînées à des vitesses de mouvement différentes.

8. Dispositif selon la revendication 7,
**caractérisé par** les sections de courroies d'application (76, 78, 80, 82) étant entraînables à des vitesses de mouvement tellement différentes que les bouteilles (10) sont mises en rotation autour de leur axe longitudinal par le contact des sections de courroies d'application (76, 78, 80, 82) avec les bouteilles à recouvrir et que, lors du mouvement par la section de transport et d'application (T) chaque niveau de hauteur à recouvrir est recouvert à travers la circonférence entière de la bouteille par au moins une des sections de courroies d'application (76, 78, 80, 82).

9. Dispositif selon une des revendications 1 à 8,
**caractérisé par** chaque section de courroies d'application (76, 78, 80, 82) étant prévue à une courroie d'application continue (40, 42, 44, 46) particulière.

10. Dispositif selon une des revendications 1 à 8,
**caractérisé par** plusieurs, de préférence deux, sections de courroies d'application arrangées l'une au-dessus de l'autre étant prévues à une courroie d'application.

11. Dispositif selon la revendication 9 ou 10,
**caractérisé par** chaque courroie d'application continue (40, 42, 44, 46) étant façonnée en tant que courroie dentée avec un corps denté (48) qui a une face arrière (50) présente une denture (52) pour s'encliqueter dans une roue dentée d'entraînement (58, 60) et présentant à une face d'application au moins une section de courroies d'application (76, 78, 80, 82).

12. Dispositif selon une des revendications 1 à 11,
**caractérisé par** des moyens d'insertion de matériel (86, 88) étant associés à chaque section de courroies d'application (76, 78, 80, 82) pour insérer du matériel d'application liquide (132) dans cette dernière.

13. Dispositif selon la revendication 12,
**caractérisé par** les moyens d'insertion de matériel (86, 88) comprenant un tuyau central (90, 92), essentiellement fixe dans la procédure d'insertion, avec au moins une ouverture radiale (112, 114) ainsi qu'une gaine de rotation (94) entourant le tuyau central (90, 92) qui tourne sur le tuyau central (90, 92) pendant la procédure d'insertion et qui comprend une pluralité d'ouvertures d'éjection (128, 130) enchevauchant temporairement la au moins une ouverture radiale d'éjection (112, 114).

14. Dispositif selon la revendication 13,
**caractérisé par** la gaine de rotation (94) étant en contact avec au moins une section de courroies d'application (76, 78, 80, 82) et étant entraînée en rotation par celle-ci.

15. Dispositif selon la revendication 13 ou 14,
**caractérisé par** un angle de déjection (V) de la au moins une ouverture radiale d'éjection (112, 114) étant variable par rapport à la section de courroies d'application (76, 78, 80, 82).

16. Dispositif selon une des revendications 13 à 15,
**caractérisé par** une alimentation en matériel d'application (134, 136, 138) insérant du matériel d'application liquide (132) dans le tuyau central (90, 92).

17. Dispositif selon une des revendications 1 à 16,
**caractérisé par** un convoyeur à courroie (36) étant prévu qui transporte les bouteilles (10) à recouvrir en position verticale à travers de la section de transport et d'application (T).

18. Procédure pour appliquer une application améliorant l'apparence des surfaces de bouteilles (T) réutilisables pour boissons, la procédure comprenant les démarches suivantes :
a) faire passer les bouteilles (10) en position verticale dans une direction de transport (R) par une section de transport et d'application (T),
b) dans la section de transport et d'application (T) créer un contact entre un niveau de hauteur des bouteilles (10) à recouvrir et au moins une section de courroies d'application (76, 78, 80, 82) avançant dans la direction de transport (R) dans la section de transport et d'application (T) et comprenant une pluralité de segments d'application (84) consécutifs dans une direction longitudinale des courroies et en même temps transférer le matériel d'application (132) contenu dans la section de courroies d'application (76, 78, 80, 82) aux surfaces des bouteilles.

19. Procédure selon la revendication 18,
**caractérisée par** la rotation des bouteilles (10) sur leur axe longitudinal (A) quand elles passent par la section de transport et d'application (T).

20. Procédure selon la revendication 19,
**caractérisée par** les bouteilles (10) entrant en contact avec au moins une section de courroies d'application (76, 78, 80, 82) sur les deux côtés par rapport à la direction de transport (R), les sections de courroies d'application (76, 78, 80, 82) prévues sur les deux côtés par rapport à la direction de transport (R) avançant à des vitesses différentes dans la direction de transport (R) et créant une rotation des bouteilles (10) qui correspond à la vitesse différentielle.

21. Procédure selon la revendication 20,
**caractérisée par** la vitesse différentielle étant choisie telle que les bouteilles (10) sont tournées dans un angle d'au moins 180° environ en passant par la section de transport et d'application (T).

22. Procédure selon une des revendications 18 à 21,
**caractérisée par** du matériel d'application liquide (132) étant inséré dans la au moins une section de courroies d'application (76, 78, 80, 82) dans une zone en dehors de la section de transport et d'application (T).

23. Procédure selon une des revendications 18 à 21,
**caractérisée par** le matériel d'application (132) liquide étant un mélange de cire, d'eau et d'émulsifiants.
